# EUROPEAN PATENT APPLICATION

(11) **EP 4 177 887 A1**
(43) Date of publication of application: **10.05.2023**
(21) Application number: 22198168.1
(22) Date of filing: 27.09.2022
(51) Int. Cl.: G11B 27/038, H04N 21/234, H04N 21/44

(54) **VIDEO STITCHING METHOD AND APPARATUS, ELECTRONIC DEVICE, AND STORAGE MEDIUM**

(30) Priority: 08.11.2021 CN 202111315996
(71) Applicant: Beijing Baidu Netcom Science Technology Co., Ltd., Beijing 100085 (CN)
(72) Inventor: HU, Tianshu, BEIJING, 100085 (CN); GUO, Hanqi, BEIJING, 100085 (CN); HAN, Junyu, BEIJING, 100085 (CN); HONG, Zhibin, BEIJING, 100085 (CN)
(74) Representative: Regimbeau

(57) **Abstract**

Provided are a video stitching method and an apparatus, an electronic device, and a storage medium. In the video stitching method, an intermediate frame is inserted between a last image frame of a first video and a first image frame of a second video. L image frames are sequentially selected in order from back to front from the first video and L image frames are sequentially selected in order from front to back from the second video separately, and L is a natural number greater than 1. The first video and the second video are stitched together to form a target video according to the intermediate frame, the L image frames in the first video, and the L image frames in the second video.

## Description

### TECHNICAL FIELD

The present disclosure relates to the technical field of artificial intelligence, further to the technical fields of deep learning and computer vision, and in particular to a video stitching method and apparatus, an electronic device, and a storage medium.

### BACKGROUND

As people pay more and more attention to entertainment and leisure, video mediums such as movies and short videos are gradually closely linked to the lives of the general public. Thus, our society is flooded with more and more demand for video creation. In the process of shooting and creating these video contents, it is often necessary to shoot multiple shots and then edit and splice these shots together.

### SUMMARY

The present disclosure provides a video stitching method and an apparatus, an electronic device, and a storage medium.

In a first aspect, the present disclosure provides a video stitching method, and the video stitching method includes: inserting an intermediate frame between a last image frame of a first video and a first image frame of a second video; sequentially selecting L image frames in order from back to front from the first video and L image frames in order from front to back from the second video separately, where L is a natural number greater than 1; and stitching together the first video and the second video to form a target video according to the intermediate frame, the L image frames in the first video, and the L image frames in the second video.

In a second aspect, the present disclosure provides a video stitching apparatus, the video stitching apparatus includes: a frame insertion module, a selection module, and a stitching module.

The frame insertion module is configured to insert an intermediate frame between a last image frame of a first video and a first image frame of a second video.

The selection module is configured to sequentially select L image frames in order from back to front from the first video and L image frames in order from front to back from the second video separately and L is a natural number greater than 1.

The stitching module is configured to stitch together the first video and the second video to form a target video according to the intermediate frame, the L image frames in the first video, and the L image frames in the second video.

In a third aspect, an embodiment of the present disclosure provides an electronic device, and the electronic device includes: one or more processors; and a memory, which is configured to store one or more programs. The one or more programs are executed by the one or more processors to cause the one or more processors to perform the video stitching method of any embodiment of the present disclosure.

In a fourth aspect, an embodiment of the present disclosure provides a storage medium storing a computer program. The program, when executed by a processor, implements the video stitching method of any embodiment of the present disclosure.

In a fifth aspect, a computer program product is provided. The computer program product is configured to, when executed by a computer device, implement the video stitching method of any embodiment of the present disclosure.

The technical means of the present disclosure solves the technical problem that in the related art video stitching is achieved by manual use of Photoshop (PS) and the manual use of PS requires a large amount of labor and is slow, time-consuming, expensive and costly. According to the technical solution of the present disclosure, the smooth transition between videos can be realized, and the difficulty of video stitching can be greatly reduced. At the same time, the speed of stitching can be increased, and the cost can be reduced.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the solution and not to limit the present disclosure. In the drawings:
FIG. 1 is a first flowchart of a video stitching method according to an embodiment of the present disclosure;
FIG. 2 is a second flowchart of a video stitching method according to an embodiment of the present disclosure;
FIG. 3 is a first schematic diagram showing the principle of a video stitching method according to an embodiment of the present disclosure;
FIG. 4 is a third flowchart of a video stitching method according to an embodiment of the present disclosure;
FIG. 5 is a second schematic diagram showing the principle of a video stitching method according to an embodiment of the present disclosure;
FIG. 6 is a structural diagram of a video stitching apparatus according to an embodiment of the present disclosure; and
FIG. 7 is a block diagram of an electronic device for implementing a video stitching method according to an embodiment of the present disclosure.

### DETAILED DESCRIPTION

Exemplary embodiments of the present disclosure, including details of embodiments of the present disclosure, are described hereinafter in conjunction with drawings to facilitate understanding. The exemplary embodiments are only illustrative. Therefore, it is to be appreciated by those of ordinary skill in the art that various changes and modifications may be made to the embodiments described herein without departing from the scope and spirit of the present disclosure. Similarly, description of well-known functions and constructions is omitted hereinafter for clarity and conciseness.

### Embodiment one

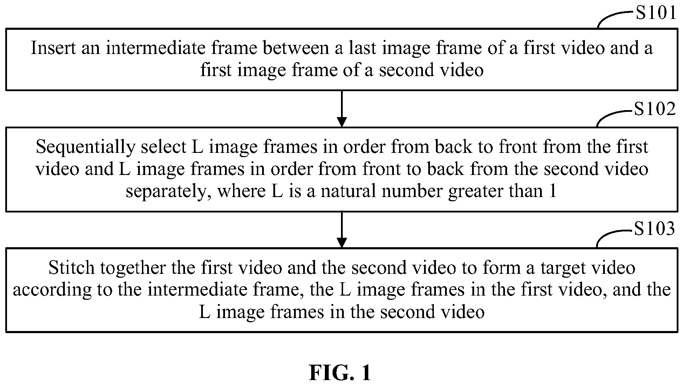

FIG. 1 is a first flowchart of a video stitching method according to an embodiment of the present disclosure. The method may be executed by a video stitching apparatus or an electronic device. The apparatus or the electronic device may be implemented as software and/or hardware. The apparatus or the electronic device may be integrated into any intelligent device having a network communication function. As shown in FIG. 1, the video stitching method may include the following.

In S101, an intermediate frame is inserted between a last image frame of a first video and a first image frame of a second video.

In this step, the electronic device may insert the intermediate frame between the last image frame of the first video and the first image frame of the second video. Specifically, the electronic device may input the last image frame of the first video and the first image frame of the second video into a pre-constructed image model, and the image model outputs an image frame as the intermediate frame between the last image frame of the first video and the first image frame of the second video.

In S102, L image frames are sequentially selected in order from back to front from the first video and L image frames are sequentially selected in order from front to back from the second video separately. L is a natural number greater than 1.

In this step, the electronic device may sequentially select L image frames in order from back to front from the first video and L image frames in order from front to back from the second video separately. L is a natural number greater than 1. For example, assuming that the first video is a video A and the second video is a video B, when the value of L is 5, the electronic device may select five image frames in order from back to front from the video A, and the five image frames are A_N-4, A_N-3, A_N-2, A_N-1, and A_N respectively. At the same time, five image frames may also be selected in order from front to back from the video B, and the five image frames are B_1, B_2, B_3, B_4, and B_5 respectively.

In S103, the first video and the second video are stitched together to form a target video according to the intermediate frame, the L image frames in the first video, and the L image frames in the second video.

In this step, the electronic device may stitch together the first video and the second video to form the target video according to the intermediate frame, the L image frames in the first video, and the L image frames in the second video. Specifically, the electronic device may first insert L-2 image frames between each image frame of second last to (L-1)-th last image frames in the first video and the intermediate frame, respectively, the L-2 image frames inserted between the first video and the intermediate frame are configured as candidate transition frames between the first video and the intermediate frame. At the same time, the electronic device may insert L-2 image frames between each image frame of second to (L-1)-th image frames in the second video and the intermediate frame, respectively, the L-2 image frames inserted between the second video and the intermediate frame are configured as candidate transition frames between the second video and the intermediate frame. Then, the electronic device may stitch together the first video and the second video to form the target video according to an L-th last image frame of the first video, the intermediate frame, an L-th image frame of the second video, the candidate transition frames between the first video and the intermediate frame, and the candidate transition frames between the second video and the intermediate frame.

In the existing video stitching technology, after multiple shots are stitched together, the composite video often has a jump at a splice. Especially for shots with a person, even if the placement of a camera does not move, the smooth transition between two shots becomes impossible due to the person's own posture shaking. The existing video stitching method is often achieved by manual use of PS, which requires a large amount of labor and is slow, time-consuming, expensive and costly. According to the video stitching method provided by the embodiment of the present disclosure, the smooth transition between videos can be realized, and the difficulty of video stitching can be greatly reduced. At the same time, the speed of stitching can be increased, and the cost can be reduced.

According to the video stitching method provided by the embodiment of the present disclosure, first, the intermediate frame is inserted between the last image frame of the first video and the first image frame of the second video. Then, L image frames are sequentially selected in order from back to front from the first video and L image frames are sequentially selected in order from front to back from the second video separately, and L is a natural number greater than 1. Then, the first video and the second video are stitched together to form the target video according to the intermediate frame, the L image frames in the first video, and the L image frames in the second video. That is, in the present disclosure, the first video and the second video can be stitched together smoothly based on the intermediate frame, the L image frames in the first video, and the L image frames in the second video, and a very obvious sign of a jump can be avoided. However, the existing video stitching method is often achieved by manual use of PS, which requires a large amount of labor and is slow, time-consuming, expensive and costly. In the present disclosure, the technical means is adopted that video stitching is achieved based on the intermediate frame, the L image frames in the first video, and the L image frames in the second video, so that the technical problem is solved that in the related art video stitching is achieved by manual use of PS and the manual use of PS requires a large amount of labor and is slow, time-consuming, expensive and costly. According to the technical solution of the present disclosure, the smooth transition between videos can be realized, and the difficulty of video stitching can be greatly reduced. At the same time, the speed of stitching can be increased, and the cost can be reduced. In addition, the technical solution of the embodiment of the present disclosure is simple and convenient to implement, easy to popularize, and applicable to a wider range.

### Embodiment two

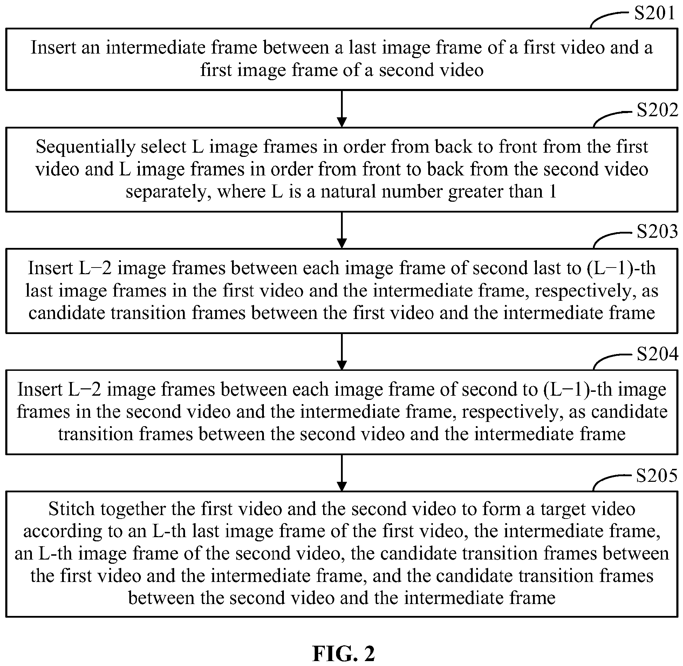

FIG. 2 is a second flowchart of a video stitching method according to an embodiment of the present disclosure. This embodiment is optimization and expansion of preceding technical solutions and may be combined with each preceding optional implementation. As shown in FIG. 2, the video stitching method may include the following.

In S201, an intermediate frame is inserted between a last image frame of a first video and a first image frame of a second video.

In S202, L image frames are sequentially selected in order from back to front from the first video and L image frames are sequentially selected in order from front to back from the second video separately. L is a natural number greater than 1.

In S203, L-2 image frames, as candidate transition frames between the first video and the intermediate frame, are inserted between each image frame of second last to (L-1)-th last image frames in the first video and the intermediate frame, respectively.

In this step, an electronic device may insert L-2 image frames between each image frame of second last to (L-1)-th last image frames in the first video and the intermediate frame, respectively, the L-2 image frames inserted between the first video and the intermediate frame are configured as candidate transition frames between the first video and the intermediate frame. For example, assuming that the first video is a video A and the second video is a video B, when the value of L is 5, the electronic device may select five image frames in order from back to front from the video A, and the five image frames are A_N-4, A_N-3, A_N-2, A_N-1, and A_N respectively. At the same time, five image frames may also be selected in order from front to back from the video B, and the five image frames are B_1, B_2, B_3, B_4, and B_5 respectively. In this step, the electronic device may insert three image frames between the intermediate frame and the A_N_1, between the intermediate frame and the A_N_2, and between the intermediate frame and the A_N_3 separately. All the respective three image frames are regarded as candidate transition frames between the first video and the intermediate frame.

In S204, L-2 image frames, as candidate transition frames between the second video and the intermediate frame, are inserted between each image frame of second to (L-1)-th image frames in the second video and the intermediate frame, respectively.

In this step, the electronic device may insert L-2 image frames between each image frame of second to (L-1)-th image frames in the second video and the intermediate frame, respectively, the L-2 image frames inserted between the second video and the intermediate frame are configured as candidate transition frames between the second video and the intermediate frame. For example, assuming that the first video is a video A and the second video is a video B, when the value of L is 5, the electronic device may select five image frames in order from back to front from the video A, and the five image frames are A_N-4, A_N-3, A_N-2, A_N-1, and A-N respectively. At the same time, five image frames may also be selected in order from front to back from the video B, and the five image frames are B_1, B_2, B_3, B_4, and B_5 respectively. In this step, the electronic device may insert three image frames between the intermediate frame and the B_2, between the intermediate frame and the B_3, and between the intermediate frame and the B_4 separately. All the respective three image frames are regarded as candidate transition frames between the second video and the intermediate frame.

In S205, the first video and the second video are stitched together to form a target video according to an L-th last image frame of the first video, the intermediate frame, an L-th image frame of the second video, the candidate transition frames between the first video and the intermediate frame, and the candidate transition frames between the second video and the intermediate frame.

In this step, the electronic device may stitch together the first video and the second video to form the target video according to the L-th last image frame of the first video, the intermediate frame, the L-th image frame of the second video, the candidate transition frames between the first video and the intermediate frame, and the candidate transition frames between the second video and the intermediate frame. Specifically, the electronic device may first select one image frame among L-2 image frames between each image frame of (L-1)-th last to second last image frames in the first video and the intermediate frame separately, as a target transition frame corresponding to the respective image frame of (L-1)-th last to second last image frames in the first video. Then, the electronic device may select one image frame among L-2 image frames between each image frame of second to (L-1)-th image frames in the second video and the intermediate frame separately, as a target transition frame corresponding to the respective image frame of second to (L-1)-th image frames in the second video. Then, the electronic device may stitch together the first video and the second video to form a target video according to the L-th last image frame of the first video, the intermediate frame, the L-th image frame of the second video, the target transition frame corresponding to the respective image frame of (L-1)-th last to second last image frames in the first video, and the target transition frame corresponding to the respective image frame of second to (L-1)-th image frames in the second video. Preferably, the electronic device may select a first image frame to an (L-2)-th image frame separately among respective L-2 image frames between each image frame of (L-1)-th last to second last image frames in the first video and the intermediate frame, each of the selected first image frame to the (L-2)-th image frame is configured as the target transition frame corresponding to the respective image frame of (L-1)-th last to second last image frames in the first video. At the same time, the electronic device may also select an (L-2)-th image frame to a first image frame separately among respective L-2 image frames between each image frame of second to (L-1)-th image frames in the second video and the intermediate frame, each of the selected (L-2)-th image frame to the first image frame is configured as target transition frames each corresponding to the respective image frame of second to (L-1)-th image frames in the second video.

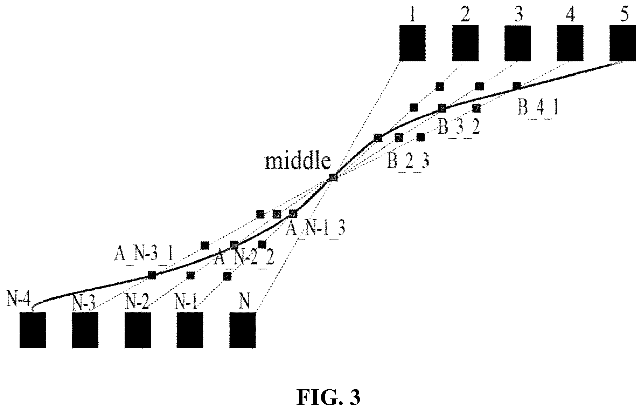

FIG. 3 is a first schematic diagram showing the principle of a video stitching method according to an embodiment of the present disclosure. As shown in FIG. 3, assuming that a first video is a video A and a second video is a video B, when the value of L is 5, the electronic device may select five image frames in order from back to front from the video A, and the five image frames are A_N-4 (denoted as N-4 in the figure), A_N-3 (denoted as N-3 in the figure), A_N-2 (denoted as N-2 in the figure), A_N-1 (denoted as N-1 in the figure), and A_N (denoted as N in the figure) respectively. At the same time, five image frames may also be selected in order from front to back from the video B, and the five image frames are B_1 (denoted as 1 in the figure), B_2 (denoted as 2 in the figure), B_3 (denoted as 3 in the figure), B_4 (denoted as 4 in the figure), and B_5 (denoted as 5 in the figure) respectively. Then, the electronic device may insert three image frames between the intermediate frame and the image frame N-1, between the intermediate frame and the image frame N-2, and between the intermediate frame and the image frame N-3 separately. All the respective three image frames are regarded as candidate transition frames between the first video and the intermediate frame. Specifically, the three image frames inserted between the intermediate frame and the image frame N-1 may be represented as A_N-1_1, A_N-1_2, and A_N-1_3 respectively, the three image frames inserted between the intermediate frame and the image frame N-2 may be represented as A_N-2_1, A_N-2_2, and A_N-2_3 respectively, and the three image frames inserted between the intermediate frame and the image frame N-3 may be represented as A_N-3_1, A_N-3_2, and A_N-3_3 respectively. Meanwhile, the electronic device may insert three image frames between the intermediate frame and the image frame 2, between the intermediate frame and the image frame 3, and between the intermediate frame and the image frame 4 separately. All the respective three image frames are regarded as candidate transition frames between the second video and the intermediate frame. Specifically, the three image frames inserted between the intermediate frame and the image frame 2 may be represented as B_2_3, B_2_2, and B_2_1 respectively, the three image frames inserted between the intermediate frame and the image frame 3 may be represented as B_3_3, B_3_2, and B_3_1 respectively, and the three image frames inserted between the intermediate frame and the image frame 4 may be represented as B_4_3, B_4_2, and B_4_1 respectively. Then, A_N-3_1, A_N-2_2, and A_N-1_3 are used as a target transition frame corresponding to N-3, a target transition frame corresponding to N-2, and a target transition frame corresponding to N-1, respectively. B_2_3, B_3_2, and B_4_1 are used as a target transition frame corresponding to the image frame 2, a target transition frame corresponding to the image frame 3, and a target transition frame corresponding to the image frame 4, respectively. Finally, N-4, A_N-3_1, A_N-2_2, A_N-1_3, the intermediate frame, B_2_3, B_3_2, B_4_1, and the image frame 4 are connected to obtain the target video which is formed after the first video and the second video are stitched together.

According to the video stitching method provided by the embodiment of the present disclosure, first, the intermediate frame is inserted between the last image frame of the first video and the first image frame of the second video. Then, L image frames are sequentially selected in order from back to front from the first video and L image frames are sequentially selected in order from front to back from the second video separately, and L is a natural number greater than 1. Then, the first video and the second video are stitched together to form the target video according to the intermediate frame, the L image frames in the first video, and the L image frames in the second video. That is, in the present disclosure the first video and the second video can be stitched together smoothly based on the intermediate frame, the L image frames in the first video, and the L image frames in the second video, and a very obvious sign of a jump can be avoided. However, the existing video stitching method is often achieved by manual use of PS, which requires a large amount of labor and is slow, time-consuming, expensive and costly. In the present disclosure, the technical means is adopted that video stitching is achieved based on the intermediate frame, the L image frames in the first video, and the L image frames in the second video, so that the technical problem is solved that in the related art video stitching is achieved by manual use of PS and the manual use of PS requires a large amount of labor and is slow, time-consuming, expensive and costly. According to the technical solution of the present disclosure, the smooth transition between videos can be realized, and the difficulty of video stitching can be greatly reduced. At the same time, the speed of stitching can be increased, and the cost can be reduced. In addition, the technical solution of the embodiment of the present disclosure is simple and convenient to implement, easy to popularize, and applicable to a wider range.

### Embodiment three

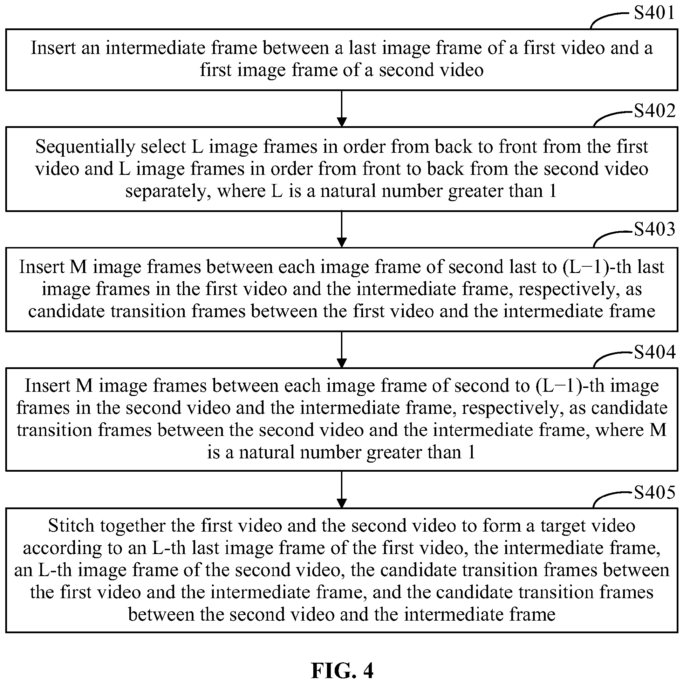

FIG. 4 is a third flowchart of a video stitching method according to an embodiment of the present disclosure. This embodiment is optimization and expansion of preceding technical solutions and may be combined with each preceding optional implementation. As shown in FIG. 4, the video stitching method may include the following.

In S401, an intermediate frame is inserted between a last image frame of a first video and a first image frame of a second video.

In S402, L image frames are sequentially selected in order from back to front from the first video and L image frames are sequentially selected in order from front to back from the second video separately. L is a natural number greater than 1.

In S403, M image frames are inserted between each image frame of second last to (L-1)-th last image frames in the first video and the intermediate frame, respectively, as candidate transition frames between the first video and the intermediate frame.

In this step, an electronic device may insert M image frames between each image frame of second last to (L-1)-th last image frames in the first video and the intermediate frame, respectively, the M image frames inserted between the first video and the intermediate frame are configured as candidate transition frames between the first video and the intermediate frame. For example, the electronic device may insert nine image frames between the intermediate frame and an image frame N-1, between the intermediate frame and an image frame N-2, and between the intermediate frame and an image frame N-3 separately. All the respective nine image frames are regarded as candidate transition frames between the first video and the intermediate frame. Meanwhile, nine image frames are inserted between the intermediate frame and an image frame 2, between the intermediate frame and an image frame 3, and between the intermediate frame and an image frame 4 separately. All the respective nine image frames are regarded as candidate transition frames between the second video and the intermediate frame.

In S404, M image frames are inserted between each image frame of second to (L-1)-th image frames in the second video and the intermediate frame, respectively, the M image frames inserted between the second video and the intermediate frame are configured as candidate transition frames between the second video and the intermediate frame. M is a natural number greater than 1.

In S405, the first video and the second video are stitched together to form a target video according to an L-th last image frame of the first video, the intermediate frame, an L-th image frame of the second video, the candidate transition frames between the first video and the intermediate frame, and the candidate transition frames between the second video and the intermediate frame.

In this step, the electronic device may stitch together the first video and the second video to form the target video according to the L-th last image frame of the first video, the intermediate frame, the L-th image frame of the second video, the candidate transition frames between the first video and the intermediate frame, and the candidate transition frames between the second video and the intermediate frame. Specifically, the present disclosure may perform non-linear sampling based on some non-linear functions, such as sigmoid, cosine, to make the transition curve smoother.

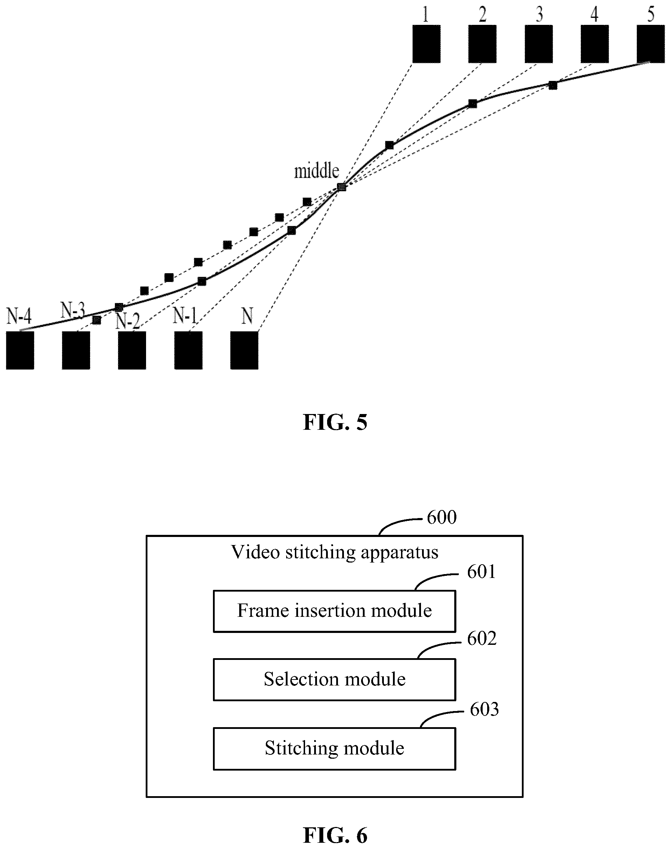

FIG. 5 is a second schematic diagram showing the principle of a video stitching method according to an embodiment of the present disclosure. As shown in FIG. 5, assuming that the first video is a video A and the second video is a video B, when the value of L is 5, the electronic device may select five image frames in order from back to front from the video A, and the five image frames are A_N-4 (denoted as N-4 in the figure), A_N-3 (denoted as N-3 in the figure), A_N-2 (denoted as N-2 in the figure), A_N-1 (denoted as N-1 in the figure), and A_N (denoted as N in the figure) respectively. At the same time, five image frames may also be selected in order from front to back from the video B, and the five image frames are B_1 (denoted as 1 in the figure), B_2 (denoted as 2 in the figure), B_3 (denoted as 3 in the figure), B_4 (denoted as 4 in the figure), and B_5 (denoted as 5 in the figure) respectively. The present disclosure may perform non-linear sampling based on some non-linear functions, such as sigmoid, cosine. The order of play after the stitching is A_N-4, A_N-3_2, A_N-2_4, A_N-1_7, the intermediate frame, B_2_7, B_3_4, B_4_2, and B_5.

According to the video stitching method provided by the embodiment of the present disclosure, first, the intermediate frame is inserted between the last image frame of the first video and the first image frame of the second video. Then, L image frames are sequentially selected in order from back to front from the first video and L image frames are sequentially selected in order from front to back from the second video separately, and L is a natural number greater than 1. Then, the first video and the second video are stitched together to form the target video according to the intermediate frame, the L image frames in the first video, and the L image frames in the second video. That is, in the present disclosure the first video and the second video can be stitched together smoothly based on the intermediate frame, the L image frames in the first video, and the L image frames in the second video, and a very obvious sign of a jump can be avoided. However, the existing video stitching method is often achieved by manual use of PS, which requires a large amount of labor and is slow, time-consuming, expensive and costly. In the present disclosure, the technical means is adopted that video stitching is achieved based on the intermediate frame, the L image frames in the first video, and the L image frames in the second video, so that the technical problem is solved that in the related art video stitching is achieved by manual use of PS and the manual use of PS requires a large amount of labor and is slow, time-consuming, expensive and costly. According to the technical solution of the present disclosure, the smooth transition between videos can be realized, and the difficulty of video stitching can be greatly reduced. At the same time, the speed of stitching can be increased, and the cost can be reduced. In addition, the technical solution of the embodiment of the present disclosure is simple and convenient to implement, easy to popularize, and applicable to a wider range.

### Embodiment four

FIG. 6 is a structural diagram of a video stitching apparatus according to an embodiment of the present disclosure. As shown in FIG.6, the apparatus 600 includes a frame insertion module 601, a selection module 602, and a stitching module 603.

The frame insertion module 601 is configured to insert an intermediate frame between a last image frame of a first video and a first image frame of a second video.

The selection module 602 is configured to sequentially select L image frames in order from back to front from the first video and L image frames in order from front to back from the second video separately. L is a natural number greater than 1.

The stitching module 603 is configured to stitch together the first video and the second video to form a target video according to the intermediate frame, the L image frames in the first video, and the L image frames in the second video.

Further, the stitching module 603 is specifically configured to insert L-2 image frames between each image frame of second last to (L-1)-th last image frames in the first video and the intermediate frame, respectively, where the L-2 image frames inserted between the first video and the intermediate frame are configured as candidate transition frames between the first video and the intermediate frame; insert L-2 image frames between each image frame of second to (L-1)-th image frames in the second video and the intermediate frame, respectively, where the L-2 image frames inserted between the second video and the intermediate frame are configured as candidate transition frames between the second video and the intermediate frame; and stitch together the first video and the second video to form a target video according to an L-th last image frame of the first video, the intermediate frame, an L-th image frame of the second video, the candidate transition frames between the first video and the intermediate frame, and the candidate transition frames between the second video and the intermediate frame.

Further, the stitching module 603 is specifically configured to select one image frame among L-2 image frames between each image frame of (L-1)-th last to second last image frames in the first video and the intermediate frame separately, as a target transition frame corresponding to the respective image frame of (L-1)-th last to second last image frames in the first video; select one image frame among L-2 image frames between each image frame of second to (L-1)-th image frames in the second video and the intermediate frame separately, as a target transition frame corresponding to the respective image frame of second to (L-1)-th image frames in the second video; and stitch together the first video and the second video to form a target video according to an L-th last image frame of the first video, the intermediate frame, an L-th image frame of the second video, the target transition frame corresponding to the respective image frame of (L-1)-th last to second last image frames in the first video, and the target transition frame corresponding to the respective image frame of second to (L-1)-th image frames in the second video.

Further, the stitching module 603 is specifically configured to select a first image frame to an (L-2)-th image frame separately among respective L-2 image frames between each image frame of (L-1)-th last to second last image frames in the first video and the intermediate frame, each of the selected first image frame to the (L-2)-th image frame is configured as the target transition frame corresponding to the respective image frame of (L-1)-th last to second last image frames in the first video.

Further, the stitching module 603 is specifically configured to select an (L-2)-th image frame to a first image frame separately among respective L-2 image frames between each image frame of second to (L-1)-th image frames in the second video and the intermediate frame, each of the selected (L-2)-th image frame to the first image frame is configured as the target transition frame corresponding to the respective image frame of second to (L-1)-th image frames in the second video.

Further, the stitching module 603 is specifically configured to insert M image frames between each image frame of second last to (L-1)-th last image frames in the first video and the intermediate frame, respectively, the M image frames inserted between the first video and the intermediate frame are configured as candidate transition frames between the first video and the intermediate frame; insert M image frames between each image frame of second to (L-1)-th image frames in the second video and the intermediate frame, respectively, the M image frames inserted between the second video and the intermediate frame are configured as candidate transition frames between the second video and the intermediate frame, where M is a natural number greater than 1; and stitch together the first video and the second video to form a target video according to an L-th last image frame of the first video, the intermediate frame, an L-th image frame of the second video, the candidate transition frames between the first video and the intermediate frame, and the candidate transition frames between the second video and the intermediate frame.

The video stitching apparatus described above can execute the method provided by any embodiment of the present disclosure and has functional modules and beneficial effects corresponding to the executed method. For technical details not described in detail in the embodiment, reference may be made to the video stitching method provided by any embodiment of the present disclosure.

Acquisition, storage, and application on a user's personal information involved in the solution of the present disclosure conform to relevant laws and regulations and do not violate the public policy doctrine.

### Embodiment five

According to an embodiment of the present disclosure, the present disclosure further provides an electronic device, a readable storage medium, and a computer program product.

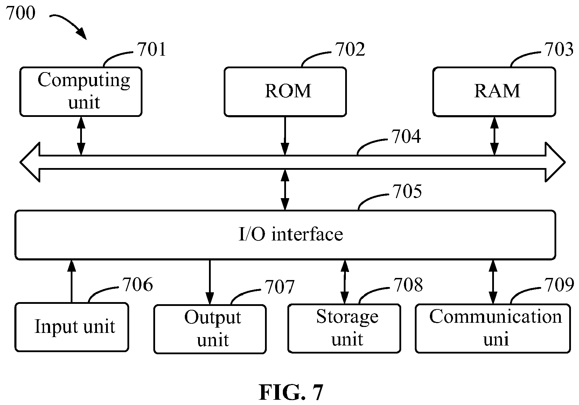

FIG. 7 is a block diagram of an exemplary electronic device 700 that may be configured to perform embodiments of the present disclosure. The electronic device is intended to represent various forms of digital computers, for example, a laptop computer, a desktop computer, a workbench, a personal digital assistant, a server, a blade server, a mainframe computer, or another applicable computer. The electronic device may also represent various forms of mobile apparatuses, for example, a personal digital assistant, a cellphone, a smartphone, a wearable device, or a similar computing apparatus. Herein the shown components, the connections and relationships between these components, and the functions of these components are only illustrative and are not intended to limit the implementation of the present disclosure as described and/or claimed herein.

As shown in FIG.7, the device 700 includes a computing unit 701. The computing unit 701 may perform various appropriate operations and processing according to a computer program stored in a read-only memory (ROM) 702 or a computer program loaded from a storage unit 708 into a random access memory (RAM) 703. Various programs and data required for operations of the device 700 may also be stored in the RAM 703. The computing unit 701, the ROM 702, and the RAM 703 are connected through a bus 704. An input/output (I/O) interface 705 is also connected to the bus 704.

Multiple components in the device 700 are connected to the I/O interface 705. The multiple components include an input unit 706 such as a keyboard or a mouse, an output unit 707 such as various types of displays or speakers, the storage unit 708 such as a magnetic disk or an optical disc, and a communication unit 709 such as a network card, a modem or a wireless communication transceiver. The communication unit 709 allows the device 700 to exchange information/data with other devices over a computer network such as the Internet and/or various telecommunication networks.

The computing unit 701 may be various general-purpose and/or special-purpose processing components having processing and computing capabilities. Examples of the computing unit 701 include, but are not limited to, a central processing unit (CPU), a graphics processing unit (GPU), a special-purpose artificial intelligence (AI) computing chip, a computing unit executing machine learning models and algorithms, a digital signal processor (DSP), and any appropriate processor, controller and microcontroller. The computing unit 701 executes various methods and processing described above, such as the video stitching method. For example, in some embodiments, the video stitching method may be implemented as computer software programs tangibly contained in a machine-readable medium, such as the storage unit 708. In some embodiments, part or all of computer programs may be loaded and/or installed on the device 700 via the ROM 702 and/or the communication unit 709. When the computer programs are loaded to the RAM 703 and executed by the computing unit 701, one or more steps of the above video stitching method may be performed. Alternatively, in other embodiments, the computing unit 701 may be configured, in any other suitable manner (for example, using firmware), to execute the video stitching method.

Herein various embodiments of the systems and techniques described in the preceding may be performed in digital electronic circuitry, integrated circuitry, a field-programmable gate array (FPGA), an application-specific integrated circuit (ASIC), an application-specific standard product (ASSP), a system on chip (SOC), a complex programmable logic device (CPLD), computer hardware, firmware, software, and/or combinations thereof. The various embodiments may include implementations in one or more computer programs. The one or more computer programs may be executable and/or interpretable on a programmable system including at least one programmable processor. The programmable processor may be a special-purpose or general-purpose programmable processor for receiving data and instructions from a memory system, at least one input apparatus and at least one output apparatus and for transmitting the data and instructions to the memory system, the at least one input apparatus and the at least one output apparatus.

Program codes for the implementation of the methods of the present disclosure may be written in one programming language or any combination of multiple programming languages. The program codes may be provided for the processor or controller of a general-purpose computer, a special-purpose computer, or another programmable data processing apparatus to enable functions/operations specified in flowcharts and/or block diagrams to be implemented when the program codes are executed by the processor or controller. The program codes may be executed entirely on a machine or may be executed partly on a machine. As a stand-alone software package, the program codes may be executed partly on a machine and partly on a remote machine or may be executed entirely on a remote machine or a server.

In the context of the present disclosure, the machine-readable medium may be a tangible medium that may include or store a program that is used by or used in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any suitable combination thereof.

In order that interaction with a user is provided, the systems and techniques described herein may be implemented on a computer. The computer has a display apparatus (for example, a cathode-ray tube (CRT) or a liquid-crystal display (LCD) monitor) for displaying information to the user and a keyboard and a pointing apparatus (for example, a mouse or a trackball) through which the user can provide input to the computer. Other types of apparatuses may also be used for providing interaction with the user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front- end component (for example, a client computer having a graphical user interface or a web browser through which a user can interact with implementations of the systems and techniques described herein), or a computing system including any combination of such back-end, middleware or front- end components. Components of a system may be interconnected by any form or medium of digital data communication (for example, a communication network). Examples of the communication network include a local area network (LAN), a wide area network (WAN), and the Internet.

The computing system may include a client and a server. The client and the server are generally remote from each other and typically interact through a communication network. The relationship between the client and the server arises by virtue of computer programs running on respective computers and having a client-server relationship to each other. The server may be a cloud server, a server of a distributed system, or a server combined with a blockchain.

It is to be understood that various forms of the preceding flows may be used with steps reordered, added, or removed. For example, the steps described in the present disclosure may be executed in parallel, in sequence or in a different order as long as the desired results of the technical solutions disclosed in the present disclosure can be achieved. The execution sequence of these steps is not limited herein.

The scope of the present disclosure is not limited to the preceding embodiments. It is to be understood by those skilled in the art that various modifications, combinations, subcombinations, and substitutions may be made according to design requirements and other factors. Any modification, equivalent substitution, improvement and the like made within the spirit and principle of the present disclosure falls within the scope of the present disclosure.

## Claims

1. A video stitching method, **characterized by** comprising:
inserting (S101) an intermediate frame between a last image frame of a first video and a first image frame of a second video;
sequentially selecting (S102) L image frames in order from back to front from the first video and L image frames in order from front to back from the second video separately, wherein L is a natural number greater than 1; and
stitching (S103) together the first video and the second video to form a target video according to the intermediate frame, the L image frames in the first video, and the L image frames in the second video.

2. The method of claim 1, wherein the stitching together the first video and the second video to form a target video according to the intermediate frame, the L image frames in the first video, and the L image frames in the second video comprises:
inserting (S203) L-2 image frames between each image frame of second last to (L-1)-th last image frames in the first video and the intermediate frame, respectively, wherein the L-2 image frames inserted between the first video and the intermediate frame are configured as candidate transition frames between the first video and the intermediate frame;
inserting (S204) L-2 image frames between each image frame of second to (L-1)-th image frames in the second video and the intermediate frame, respectively, wherein the L-2 image frames inserted between the second video and the intermediate frame are configured as candidate transition frames between the second video and the intermediate frame; and
stitching (S205) together the first video and the second video to form a target video according to an L-th last image frame of the first video, the intermediate frame, an L-th image frame of the second video, the candidate transition frames between the first video and the intermediate frame, and the candidate transition frames between the second video and the intermediate frame.

3. The method of claim 2, wherein the stitching together the first video and the second video to form a target video according to the L-th last image frame of the first video, the intermediate frame, the L-th image frame of the second video, the candidate transition frames between the first video and the intermediate frame, and the candidate transition frames between the second video and the intermediate frame comprises:
selecting one image frame among the L-2 image frames between each image frame of (L-1)-th last to second last image frames in the first video and the intermediate frame separately, and configuring the selected one image between the first video and the intermediate frame as a target transition frame corresponding to a respective image frame of (L-1)-th last to second last image frames in the first video;
selecting one image frame among the L-2 image frames between each image frame of second to (L-1)-th image frames in the second video and the intermediate frame separately, and configuring the selected one image between the second video and the intermediate frame is configured as a target transition frame corresponding to a respective image frame of second to (L-1)-th image frames in the second video; and
stitching together the first video and the second video to form a target video according to an L-th last image frame of the first video, the intermediate frame, an L-th image frame of the second video, the target transition frame corresponding to the respective image frame of (L-1)-th last to second last image frames in the first video, and the target transition frame corresponding to the respective image frame of second to (L-1)-th image frames in the second video.

4. The method of claim 3, wherein the selecting one image frame among the L-2 image frames between each image frame of (L-1)-th last to second last image frames in the first video and the intermediate frame separately, configuring the selected one image between the first video and the intermediate frame as a target transition frame corresponding to the respective image frame of (L-1)-th last to second last image frames in the first video comprises:
selecting a first image frame to an (L-2)-th image frame separately among respective L-2 image frames between each image frame of (L-1)-th last to second last image frames in the first video and the intermediate frame, wherein each of the selected first image frame to the (L-2)-th image frame is configured as the target transition frame corresponding to the respective image frame of (L-1)-th last to second last image frames in the first video.

5. The method of claim 3, wherein selecting one image frame among L-2 image frames between each image frame of second to (L-1)-th image frames in the second video and the intermediate frame separately, as a target transition frame corresponding to the respective image frame of second to (L-1)-th image frames in the second video comprises:
selecting an (L-2)-th image frame to a first image frame separately among respective L-2 image frames between each image frame of second to (L-1)-th image frames in the second video and the intermediate frame, wherein each of the selected (L-2)-th image frame to the first image frame is configured as the target transition frame corresponding to the respective image frame of second to (L-1)-th image frames in the second video.

6. The method of claim 1, wherein the stitching together the first video and the second video to form the target video according to the intermediate frame, the L image frames in the first video, and the L image frames in the second video comprises:
inserting (S403) M image frames between each image frame of second last to (L-1)-th last image frames in the first video and the intermediate frame, respectively, wherein the M image frames inserted between the first video and the intermediate frame are configured as candidate transition frames between the first video and the intermediate frame;
inserting (S404) M image frames between each image frame of second to (L-1)-th image frames in the second video and the intermediate frame, respectively, wherein the L-2 image frames inserted between the second video and the intermediate frame are configured as candidate transition frames between the second video and the intermediate frame, wherein M is a natural number greater than 1; and
stitching (S405) together the first video and the second video to form a target video according to an L-th last image frame of the first video, the intermediate frame, an L-th image frame of the second video, the candidate transition frames between the first video and the intermediate frame, and the candidate transition frames between the second video and the intermediate frame.

7. A video stitching apparatus, **characterized by** comprising: a frame insertion module (601), a selection module (602), and a stitching module (603); wherein
the frame insertion module (601) is configured to insert an intermediate frame between a last image frame of a first video and a first image frame of a second video;
the selection module (602) is configured to sequentially select L image frames in order from back to front from the first video and L image frames in order from front to back from the second video separately and L is a natural number greater than 1; and
the stitching module (603) is configured to stitch together the first video and the second video to form a target video according to the intermediate frame, the L image frames in the first video, and the L image frames in the second video.

8. The apparatus of claim 7, wherein the stitching module (603) is further configured to: insert L-2 image frames between each image frame of second last to (L-1)-th last image frames in the first video and the intermediate frame, respectively, wherein the L-2 image frames inserted between the first video and the intermediate frame are configured as candidate transition frames between the first video and the intermediate frame; insert L-2 image frames between each image frame of second to (L-1)-th image frames in the second video and the intermediate frame, respectively, wherein the L-2 image frames inserted between the second video and the intermediate frame are configured as candidate transition frames between the second video and the intermediate frame; and stitch together the first video and the second video to form a target video according to an L-th last image frame of the first video, the intermediate frame, an L-th image frame of the second video, the candidate transition frames between the first video and the intermediate frame, and the candidate transition frames between the second video and the intermediate frame.

9. The apparatus of claim 8, wherein the stitching module (603) is further configured to select one image frame among L-2 image frames between each image frame of (L-1)-th last to second last image frames in the first video and the intermediate frame separately, as a target transition frame corresponding to the respective image frame of (L-1)-th last to second last image frames in the first video; select one image frame among L-2 image frames between each image frame of second to (L-1)-th image frames in the second video and the intermediate frame separately, as a target transition frame corresponding to the respective image frame of second to (L-1)-th image frames in the second video; and stitch together the first video and the second video to form a target video according to an L-th last image frame of the first video, the intermediate frame, an L-th image frame of the second video, the target transition frame corresponding to the respective image frame of (L-1)-th last to second last image frames in the first video, and the target transition frame corresponding to the respective image frame of second to (L-1)-th image frames in the second video.

10. The apparatus of claim 9, wherein the stitching module (603) is further configured to select a first image frame to an (L-2)-th image frame separately among respective L-2 image frames between each image frame of (L-1)-th last to second last image frames in the first video and the intermediate frame, wherein the each of the selected first image frame to the (L-2)-th image frame is configured as the target transition frame corresponding to the respective image frame of (L-1)-th last to second last image frames in the first video.

11. The apparatus of claim 9, wherein the stitching module (603) is further configured to select an (L-2)-th image frame to a first image frame separately among respective L-2 image frames between each image frame of second to (L-1)-th image frames in the second video and the intermediate frame, wherein each of the selected (L-2)-th image frame to the first image frame is configured as the target transition frame corresponding to the respective image frame of second to (L-1)-th image frames in the second video.

12. The apparatus of claim 7, wherein the stitching module (603) is further configured to insert M image frames between each image frame of second last to (L-1)-th last image frames in the first video and the intermediate frame, respectively, wherein the M image frames inserted between the first video and the intermediate frame are configured as candidate transition frames between the first video and the intermediate frame; insert M image frames between each image frame of second to (L-1)-th image frames in the second video and the intermediate frame, respectively, wherein the L-2 image frames inserted between the second video and the intermediate frame are configured as candidate transition frames between the second video and the intermediate frame, wherein M is a natural number greater than 1; and stitch together the first video and the second video to form a target video according to an L-th last image frame of the first video, the intermediate frame, an L-th image frame of the second video, the candidate transition frames between the first video and the intermediate frame, and the candidate transition frames between the second video and the intermediate frame.

13. An electronic device, comprising:
at least one processor; and
a memory communicatively connected to the at least one processor;
wherein the memory stores instructions executable by the at least one processor to enable the at least one processor to perform the method of any one of claims 1 to 6.

14. A non-transitory computer-readable storage medium storing computer instructions, wherein the computer instructions are configured to cause a computer to perform the method of any one of claims 1 to 6.

15. A computer program product, comprising a computer program, wherein when the computer program is executed by a processor, the method of any one of claims 1 to 6 is performed.
